Europäisches Patentamt

European Patent Office

Office européen des brevets

(11) Veröffentlichungsnummer: **0 387 500**

**A1**

# EUROPÄISCHE PATENTANMELDUNG

(21) Anmeldenummer: **90101181.7**

(22) Anmeldetag: **22.01.90**

(51) Int. Cl.5: **H02K 5/10, H02K 9/06**

(30) Priorität: **10.02.89 DE 3903945**

(43) Veröffentlichungstag der Anmeldung:
**19.09.90 Patentblatt 90/38**

(84) Benannte Vertragsstaaten:
**AT FR IT**

(71) Anmelder: **Licentia Patent-Verwaltungs-GmbH**
**Theodor-Stern-Kai 1**
**D-6000 Frankfurt 1(DE)**

(72) Erfinder: **Hauke, Dieter**
**Astruperstrasse 7**
**D-2904 Hatten(DE)**

(74) Vertreter: **Wolf, Otto, Dr. Ing.**
**Licentia Patent-Verwaltungs-GmbH**
**Theodor-Stern-Kai 1**
**D-6000 Frankfurt 1(DE)**

(54) **Schutzabdeckung für den freien Wickelkopf einer einseitig gelagerten elektrischen Maschine.**

(57)
2.1 Aus Fertigungs- und Montagegründen ist es häufig erforderlich, den B-seitigen Wickelkopf der Statorwicklung von lediglich A-seitig gelagerten elektrischen Maschinen zu schützen. Dies geschieht meist mit einer stationären, kappenartigen Abdeckung. Die neue Schutzabdeckung soll bei einfachem Aufbau einen optimalen Schutz gewährleisten und gegebenenfalls auch eine Zusatzfunktion übernehmen können.

2.2 Die Schutzabdeckung ist als unmittelbar oder mittelbar mit dem Rotor (11) vereinigtes Bauteil (17) ausgebildet.

Fig 1

## Schutzabdeckung für den freien Wickelkopf einer einseitig gelagerten elektrischen Maschine

Fertigungs- und montagebedingt ist häufig ein Schutz des B-seitigen Wickelkopfs der Statorwicklung elektrischer Maschinen erforderlich, die lediglich A-seitig gelagert sind.

Eine bekannte Maßnahme zum Schutz des besagten Wickelkopfs ist dessen Abdeckung durch ein kappenartiges Gebilde, das stationär am Wikkelkopf bzw. am Statorblechpaket befestigt ist.

Der Erfindung liegt die Aufgabe zugrunde, eine Schutzabdeckung für die freien Wickelköpfe lediglich A-seitig gelagerter elektrischer Maschinen zu schaffen, die bei einfachem Aufbau und problemloser Montage einen optimalen Schutz gewährleistet und gegebenenfalls für Zusatzfunktionen heranziehbar ist.

Diese Aufgabe ist erfindungsgemäß mit den kennzeichnenden Merkmalen des Anspruchs 1 gelöst.
Weiterbildungen und zweckmäßige Ausgestaltungen der Erfindung sind in den Unteransprüchen angegeben.

Die Erfindung wird anhand der Zeichnung, die zwei Ausführungsbeispiele der Schutzabdeckung schematisch veranschaulicht, erläutert.

Es zeigen:

Fig. 1 einen Längsschnitt durch einen fliegend gelagerten Elektromotor mit freiliegendem Wickelkopf,

Fig. 2 eine Teilansicht gemäß Fig. 1, jedoch mit anders gestalteter Schutzabdeckung.

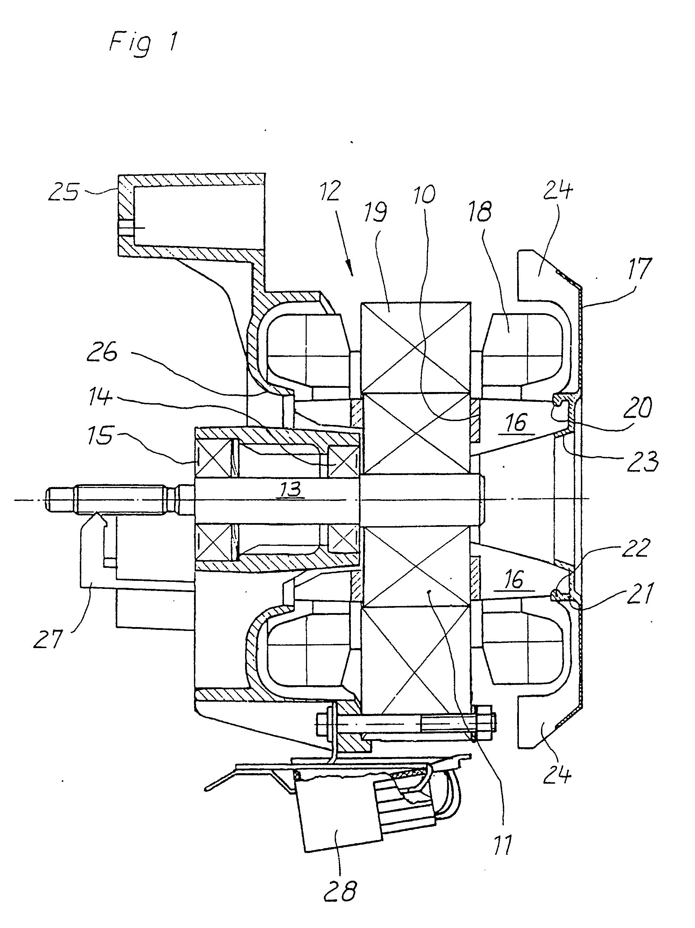

Wie die Figur 1 zeigt, ist der B-seitige Kurzschlußring 10 des Rotors 11 eines Asynchronmotors 12, dessen Ankerwelle 13 A-seitig durch zwei Kugellager 14, 15 drehbar gelagert und B-seitig lagerfrei ist, mit keilförmig gestalteten Segmenten 16 versehen, welche als Lüfterflügel wirksam sind. An den sich axial nach außen erstreckenden Segmenten 16 des Kurzschlußrings 10, deren Oberkanten etwa parallel zur Rotorachse verlaufen und dessen Innenkanten von unten nach oben außen abgeschrägt sind, ist eine Abdeckkappe 17 zweckmäßigerweise lösbar befestigt, die den Wickelkopf 18 des Stators 19 in axialer Richtung vollständig und radial wenigstens teilweise abschirmt. Zu diesem Zweck weisen die Segmente 16 an ihrer Oberkante Vertiefungen 20 auf, in welche am Innenumfang eines bundförmigen Ansatzes 21 der Abdeckkappe 17 (Schutzabdeckung) vorgesehene radiale Vorsprünge 22 eingreifen. Diese Vorsprünge sind zweckmäßigerweise als federelastische Rasthaken ausgebildet, die einrastend in die als Hinterschneidungen realisierten Vertiefungen 20 passen, die auf spanabhebendem oder spanlosem Weg gewonnen sein können (Schnappverbindung). Gegebenenfalls können die Vorsprünge 22 auch durch einen umlaufenden Innenwulst des bundförmigen Ansatzes 21 verkörpert sein wobei der Innenwulst mit einem geeigneten Querschnitt versehen ist und im Rahmen des Erforderlichen nachgiebig ausgebildet ist. Die Abdeckkappe 17 besitzt des weiteren einen sich gegen den Rotor 11 zu konisch verjüngenden, an die Schräge der Kanten der Lüftersegmente 16 angepaßten Kragen 23, der als Stütz- und Führungsmittel dient. Auf diese Weise ist eine sichere und strömungstechnisch günstige Vereinigung der Segmente 16 des Kurzschlußrings 10 mit der Abdeckkappe 17 gewonnen.

Die Abdeckkappe 17 wird dabei zweckmäßigerweise so ausgestaltet, daß sie einen wirksamen Schutz und einen Lüfter verkörpert. Zu diesem Zweck ist sie an ihrer Innenseite mit geeig neten Flügelsegmenten 24 versehen, die sich in axialer Richtung auch noch weiter über den Wickelkopf hinweg erstrecken können.

Durch die Kombination von als Lüfterflügel wirkenden Segmenten des Kurzschlußrings und der ebenfalls als Lüfter wirksamen Schutzabdeckung für den Wickelkopf wird somit neben eines wirksamen Wickelkopfschutzes auch eine Verbesserung der Kühlung des Wickelkopfes des betreffenden Motors erzielt. Bei geeignet konzipierter Schutzabdeckung 17 brauchen die Segmente 16 am Kurzschlußring 10 nicht unbedingt eine nennenswerte Lüfterwirkung entfalten, umgekehrt kann bei belüftungsmäßig gesehen optimaler Ausbildung und Anordnung der Segmente 16 am Kurzschlußring 10 auf eine ausgeprägte Belüftungswirkung der Abdeckkappe 17 verzichtet werden.

Der Motor gemäß den Ausführungsbeispielen dient zum Antrieb der Pumpe eines Geschirrspülers. Diese wird an dem mit 25 bezeichneten hohlzylindrischen Teil des Lagerschilds 26 befestigt und mittels eines Verklinkungshebels 27 und/oder eines Bajonettverschlusses in ihrer Lage fixiert. Mit 28 ist ein Anschlußgehäuse für einen Sechsflachstecker zur Speisung des Motors und dessen Steuerungsfunktionen bezeichnet.

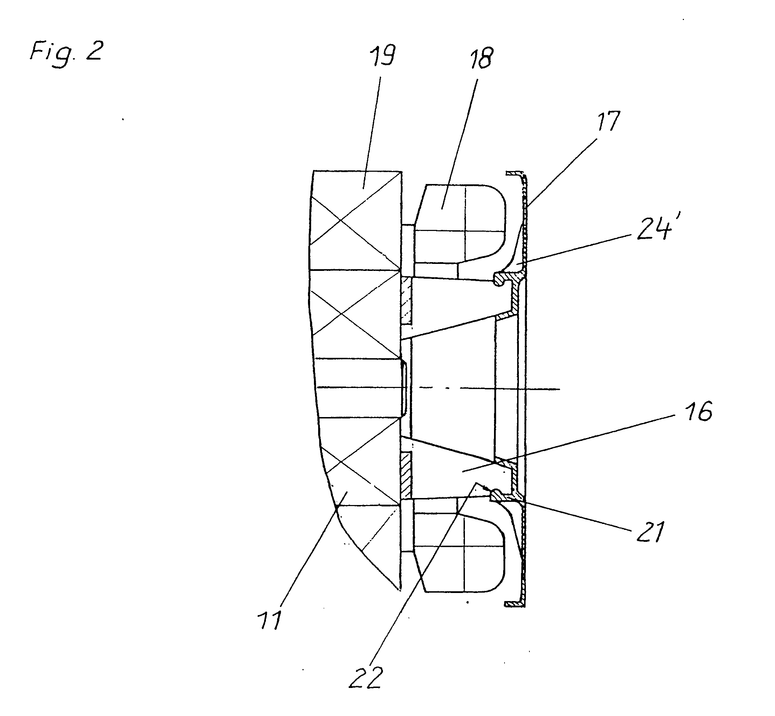

Die in Figur 2 veranschaulichte Schutzabdekkung 17 in Form einer Abdeckkappe besitzt weniger ausgeprägte Flügelsegmente 24 als im Falle der Figur 1. Außerdem ist hier die axiale Erstreckung der Schutzabdeckung vergleichsweise geringer.

Mitunter kann es auch vorteilhaft sein, zur weiteren Verbesserung der Kühlwirkung in der Schutzabdeckung 17 Strömungskanäle für eine Axialluftströmung vorzusehen.

**Ansprüche**

1. Schutzabdeckung für den freien Wickelkopf einer einseitig gelagerten elektrischen Maschine, dadurch gekennzeichnet, daß sie als unmittelbar oder mittelbar mit dem Rotor (11) vereinigtes Bauteil (17) ausgebildet ist.

2. Schutzabdeckung nach Anspruch 1, dadurch gekennzeichnet, daß sie lösbar am Rotor (11) angebracht ist.

3. Schutzabdeckung nach einem der vorhergehenden Ansprüche, dadurch gekennzeichnet, daß sie mit am Kurzschlußring (10) des Rotors (11) eines Asynchronmotors vorgesehenen Segmenten (16 ) vereinigt ist.

4. Schutzabdeckung nach einem der vorhergehenden Ansprüche, dadurch gekennzeichnet, daß sie als einen bundförmigen Ansatz (21) aufweisende Abdeckkappe (17) ausgebildet ist, wobei der Ansatz (21) sich radial nach innen erstreckende Vorsprünge (22) besitzt, die in Vertiefungen (20) in der Oberkante der Segmente (16) des Kurzschlußrings (10) eingreifen.

5. Schutzabdeckung nach Anspruch 4, dadurch gekennzeichnet, daß die Vorsprünge (22) als in die Vertiefungen der Lüftersegmente (16) einrastend passende Rasthaken ausgebildet sind.

6. Schutzabdeckung nach den Ansprüchen 4 und 5, dadurch gekennzeichnet, daß die Abdeckkappe (17) mit einem sich gegen den Rotor (13) zu konisch verjüngenden, an die Schräge der Kanten der Lüftersegmente (16) angepaßten Kragen (23) versehen ist.

7. Schutzabdeckung nach den Ansprüchen 1 bis 6, dadurch gekennzeichnet, daß sie mit als Lüfterflügel wirksamen Flügelsegmenten (24,24') versehen ist.

8. Schutzabdeckung nach einem der vorhergehenden Ansprüche, dadurch gekennzeichnet daß sie relativ zum Rotor ( 13) drehbar angeordnet ist.

Fig 1

Fig. 2

EP 0 387 500 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2529405 (LICENTIA) <br> * Seite 1, Zeile 29 - Seite 4, Zeile 16; Figur * <br> --- | 1-8. | H02K5/10 <br> H02K9/06 |
| X | DE-A-1910510 (LICENTIA) <br> * Seite 1, Zeilen 1 - 4 * <br> * Seite 2, Zeile 27 - Seite 3, Zeile 8; Figur * | 1, 2, 7. | |
| Y | | 4, 5, 8. | |
| | --- | | |
| Y | FR-A-2456236 (PAPST-MOTOREN) <br> * Seite 4, Zeile 28 - Seite 6, Zeile 29; Figur 3. * <br> --- | 4, 5, 8. | |
| X | US-A-3750951 (PERL) <br> * Spalte 3, Zeile 53 - Spalte 4, Zeile 31 * <br> * Spalte 5, Zeilen 29 - 36; Figuren 1, 3. * <br> ----- | 1, 2, 7. | |

| | RECHERCHIERTE SACHGEBIETE (Int. Cl.5) |
|---|---|
| | H02K |

Der vorliegende Recherchenbericht wurde für alle Patentansprüche erstellt

| Recherchenort | Abschlußdatum der Recherche | Prüfer |
|---|---|---|
| DEN HAAG | 19 JUNI 1990 | TIO K.H. |